# FASCICULE DE BREVET EUROPEEN

(11) **EP 2 135 111 B1**
(45) Date de publication et mention de la délivrance du brevet: **03.07.2013**
(21) Numéro de dépôt: 08717301.9
(22) Date de dépôt: 29.02.2008
(51) Int. Cl.: G01S 17/10, G01S 7/481, G01S 7/483

(54) **TELEMETRE MULTICOLORE**
MEHRFARBEN-TELEMETRIE
MULTICOLOURED TELEMETRY

(30) Priorité: 02.03.2007 FR 0701549
(43) Date de publication de la demande: 23.12.2009
(73) Titulaire: THALES, 92200 Neuilly-sur-Seine (FR)
(72) Inventeur: ROUSSEAU, Pascal, F-78220 Viroflay (FR)
(74) Mandataire: Henriot, Marie-Pierre
(86) Numéro de dépôt international: PCT/EP2008/052529
(87) Numéro de publication internationale: WO 2008/107409

(56) Documents cités:
- EP-A- 0 720 028
- WO-A-2006/077588
- FR-A- 2 543 690
- US-A- 4 163 954
- US-A- 4 537 502
- US-A- 5 164 733
- US-A- 5 276 453
- US-A- 5 307 138
- US-A- 5 621 514
- US-A- 5 835 199
- US-B1- 6 639 546

## Description

Le domaine de l'invention est celui des télémètres laser à impulsions.

On rappelle le principe de fonctionnement d'un télémètre.

Pour mesurer la distance entre le télémètre et une cible, une impulsion est émise vers la cible. La lumière est rétrodiffusée par la cible vers le télémètre et l'impulsion de retour aussi désignée écho, est détectée. La distance est mesurée à partir de la durée entre le départ de l'impulsion et son retour.

La lumière est absorbée par l'atmosphère, le long du trajet aller. Elle est alors absorbée et diffusée par la cible puis absorbée par l'atmosphère sur le trajet retour ; elle est diluée le long du chemin retour d'un facteur proportionnel au carré de la distance. Quand la distance augmente, la quantité de lumière détectée décroît rapidement.

Pour augmenter la distance de télémétrie malgré ces pertes atmosphériques, les voies suivantes sont possibles :
- augmenter l'énergie par impulsion, mais cette augmentation est limitée par les contraintes de sécurité oculaire et par le volume de l'émetteur qui augmente avec l'énergie par impulsion,
- augmenter la dimension de la pupille de réception mais cela augmente les dimensions du système,
- augmenter la sensibilité du récepteur avec des systèmes à multi-impulsions utilisant des micro-lasers ou des lasers à fibres optiques. Ceci permet d'utiliser la post-intégration. Il y a augmentation de la puissance moyenne (énergie par impulsion x cadence) sans augmenter l'énergie par impulsion.

Actuellement on distingue trois principales catégories de télémètres laser.
- Les télémètres ayant une émission continue modulée
- Les télémètres multi-impulsions
- Les télémètres mono-impulsion

Les télémètres ayant une émission continue modulée sont utilisés soit avec des cibles coopératives soit lorsque le temps de mesure n'est pas critique. Une cible coopérative est par exemple équipée d'un rétro-réflecteur, et renvoie ainsi plus de lumière.

Pour de longues distances (> 10 km), les télémètres utilisent habituellement une seule impulsion de grande énergie limitée par la sécurité oculaire dans les conditions d'emploi, c'est-à-dire inférieure à 100 mJ et pour une longueur d'onde comprise entre 1,5 et 1,8 µm. Cette énergie, suivant les applications, va de quelques millijoules à plusieurs dizaines de millijoules par impulsion.

Le document US5835199 décrit un télémètre multi-implusions émettant simultanément plusieurs composantes de fréquence et utilisant une détection hétérodyne.

Les télémètres multi-impulsions sont utilisés en courtes distances (<10 km) avec de la post intégration. Pour réduire le coût on utilise l'émission d'une diode laser.

La post-intégration présente certains inconvénients.

On rappelle en effet que :
si pour une impulsion émise, on a pour l'écho détecté S/B,
alors pour n impulsions émises on a (nS)/(n ^{½} B), soit (n ^{½} S)/B, d'où une amélioration d'un facteur n ^{½}.

Mais dans le cas de la post-intégration, la fréquence de répétition des impulsions limite la distance atteignable en raison de l'ambiguïté sur la distance. Cette ambiguïté se produit quand une impulsion détectée provient soit de la dernière impulsion émise, retournée par une cible proche, soit d'une impulsion émise antérieurement et retournée par une cible éloignée, sans que l'on puisse déterminer entre ces 2 alternatives quelle cible est mesurée.

Le document US6639 546 décrit plusieurs procédés pour lever les ambiguïtés distances dans un radar.

Une solution appliquée par les radars pour lever cette ambiguïté consiste à utiliser une fréquence de répétition des impulsions (ou cadence) variable : l'intervalle de temps variable entre 2 impulsions permet de réaliser l'accumulation (post-intégration) malgré cette ambiguïté au détriment d'une augmentation du niveau de bruit dans lequel sont enfouis les échos ambigus. Mais dans le cas d'impulsions optiques, la réception qui est sensible à la longueur d'onde de l'émission, peut être perturbée par la rétrodiffusion de l'atmosphère et par les échos des émissions à courte distance.

Une autre solution consiste à attendre suffisamment longtemps le retour d'une impulsion avant d'émettre l'impulsion suivante. La distance à prendre en compte peut être plus importante que la portée maximale garantie. Une cible faisant rétroréftecteur peut fournir un écho détectable bien au delà de la portée maximale attendue. Cela conduit à ne pas dépasser une fréquence seuil de répétition des impulsions, dite fréquence seuil, pour ne pas avoir d'ambiguïtés. Par exemple pour une portée de 75 km, la durée aller-retour d'un signal est d'environ 500 µs ; dans ce cas, la fréquence seuil est donc de 2 kHz. Si une durée d'intégration d'1 seconde est acceptable, on peut alors accumuler 2000 mesures, soit une augmentation de S/B d'un facteur 44 (racine carré de 2000), ce qui est significatif. Pour que ce raisonnement soit valide, la cible doit être suffisamment stationnaire pendant la durée de mesure.

Le but de l'invention est d'augmenter la distance de télémétrie en évitant les écueils d'ambiguïté sur la distance, de sécurité oculaire insuffisante et si possible d'encombrement important.

La solution est basée sur l'émission d'impulsions de N longueurs d'onde distinctes avec pour chaque longueur d'onde une fréquence de répétition des impulsions inférieure à la fréquence seuil. Ainsi aucune émission à une longueur d'onde donnée ne rencontre le problème de l'ambiguïté sur la distance.

A chacune de ces émissions correspond une réception. Il y a donc autant de réceptions à longueurs d'onde distinctes qui détectent les échos (ou impulsions réfléchies) pour chaque longueur d'onde. Les mesures sont ensuite cumulées pour les N réceptions.

Ainsi pour une fréquence seuil de 2 kHz, une durée d'intégration de 1 seconde et N=10, on peut accumuler 2000 x 10 = 20 000 mesures, et donc obtenir une amélioration de S/B d'un facteur 141 (racine carré de 20000) sans rencontrer d'ambiguïté sur les mesures.

On entend par longueur d'onde une bande spectrale étroite : on considère typiquement environ 40 longueurs d'onde comprises entre 1,5 et 1,6 µm. La technologie mise en oeuvre dans cette invention permet un beaucoup plus grand nombre de bandes spectrales.

Plus précisément l'invention a pour objet un télémètre comportant un dispositif d'émission d'impulsions laser et un dispositif de détection des impulsions réfléchies par un objet distant. Il est principalement caractérisé en ce que le dispositif d'émission est apte à émettre des impulsions de N longueurs d'onde distinctes, N étant un entier supérieur à 1, avec pour chaque longueur d'onde, une fréquence de répétition des impulsions inférieure à une fréquence seuil prédéterminée.

Selon une caractéristique de l'invention, il comprend un dispositif de détection apte à détecter les impulsions réfléchies pour chacune des N longueurs d'onde et un dispositif d'accumulation de l'ensemble des impulsions détectées.

Selon une autre caractéristique de l'invention, le dispositif d'émission comprend K émetteurs chacun étant apte à émettre des impulsions à Mᵢ longueurs d'onde distinctes, i variant de 1 à K avec
M₁ + M₂ + ...+ Mₖ = N, K étant un entier tel que 1<=K<=N.

Le dispositif d'émission comprend éventuellement un dispositif d'amplification optique de chaque impulsion émise qui peut être un amplificateur large bande dont la bande passante comprend les N longueurs d'onde, et/ou K amplificateurs à bande étroite dont les bandes passantes correspondent respectivement aux Mᵢ longueurs d'onde.

Avantageusement, lorsque K>1, le dispositif d'émission comprend un dispositif de multiplexage des impulsions issues des K émetteurs.

De préférence, le dispositif d'émission comprend au moins un coupleur optique d'émission.

Selon une caractéristique de l'invention, les émetteurs sont des diodes laser.

Selon une autre caractéristique de l'invention, le dispositif de détection comprend K' détecteurs, K' étant un entier tel que 1<=K'<=N, chaque détecteur Dⱼ étant apte à détecter des impulsions selon Pⱼ longueurs d'onde distinctes, j variant de 1 à K' avec P₁ + P₂ + ...+ P_{k'} = N.

Le dispositif de détection comprend éventuellement un dispositif d'amplification optique de chaque impulsion reçue qui peut être un amplificateur large bande dont la bande passante comprend les N longueurs d'onde, et/ou K' amplificateurs à bande étroite dont les bandes passantes correspondent respectivement aux Pⱼ longueurs d'onde.

Le dispositif de détection comprend avantageusement un dispositif de filtrage optique des impulsions reçues selon N longueurs d'onde.

De préférence, le dispositif de détection comprend au moins un coupleur optique de détection.

D'autres caractéristiques et avantages de l'invention apparaîtront à la lecture de la description détaillée qui suit, faite à titre d'exemple non limitatif et en référence aux dessins annexés dans lesquels :

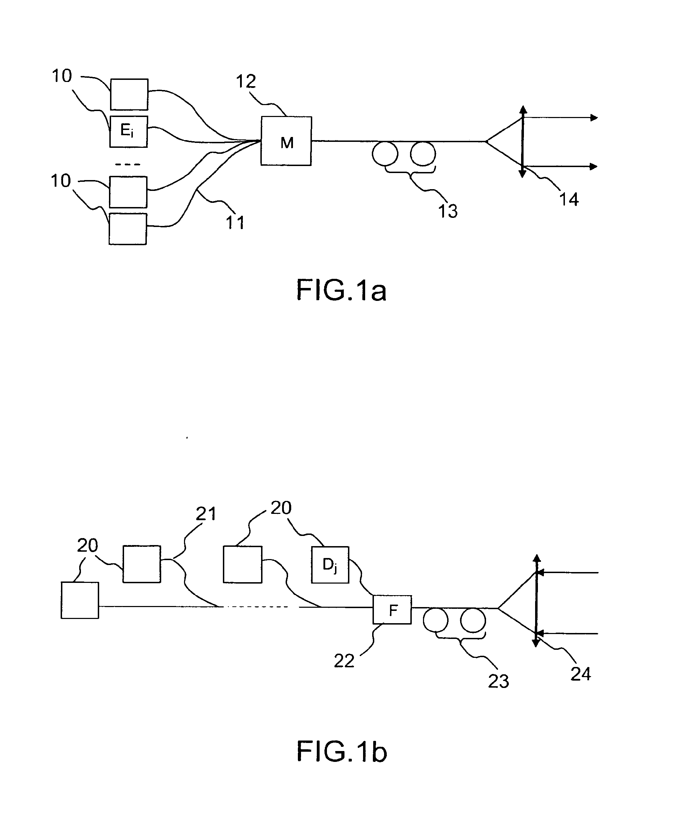

les figures 1a et 1b représentent schématiquement les parties émission et réception d'un exemple de télémètre selon l'invention.

On va décrire plus en détail des exemples de télémètres selon l'invention. On considère tout d'abord la partie émission de ces télémètres en relation avec la figure 1 a. Des dispositifs d'orientation de la ligne de visée, qui ne sont pas représentés peuvent être interposés sur les trajets optiques.

Pour la partie émission du télémètre les fonctions de base sont l'émission, le multiplexage éventuel et le couplage optique.

Le dispositif d'émission comprend N émetteurs 10 disposés en parallèle avec pour chaque émetteur :
- une longueur d'onde distincte, et
- une fréquence de répétition des impulsions inférieure à la fréquence seuil. Ainsi aucun émetteur ne rencontre le problème de l'ambiguïté sur la distance.

Le dispositif d'émission comprend plus généralement K émetteurs, chaque émetteur Eᵢ 10 étant apte à émettre des impulsions selon Mᵢ longueurs d'onde distinctes, i variant de 1 à K avec M₁ + M₂ + ...+ Mₖ = N, et fonctionnant chacun à Mᵢ fréquences de répétition des impulsions inférieures à la fréquence seuil.

Le faisceau optique émis par un émetteur Eᵢ est donc multi-longueur d'onde, c'est-à-dire comprend Mᵢ canaux optiques.

D'une longueur d'onde à l'autre, les fréquences de répétition des impulsions peuvent être différentes ou identiques. Les instants d'émission des impulsions de longueurs d'onde différentes sont de préférence différents. Dans le cas d'un émetteur Eᵢ unique pour plusieurs longueurs d'onde, les instants d'émission des impulsions sont différents en raison de l'énergie nécessaire pour chaque impulsion qui autrement serait partagée ; ceci est également le cas pour un émetteur accordable en longueur d'onde qui fonctionne sequentiellement dans le temps.

Le télémètre comprend une optique de couplage 14 qui met en forme le faisceau pour l'émission à travers l'atmosphère vers la cible : le faisceau laser émis est collimaté vers la cible par le coupleur d'émission pour produire un faisceau de faible divergence. Il y un coupleur optique par émetteur ou un coupleur optique commun aux K émetteurs comme représenté sur la figure.

Dans le cas où l'émission des impulsions est obtenue par K émetteurs distincts et où le télémètre a une seule optique de couplage à l'émission, un dispositif de multiplexage optique 12 est nécessaire. Dans ce cas les K faisceaux optiques transportant des impulsions de longueurs d'onde différentes sont regroupés en un seul faisceau optique.

De préférence, le télémètre comprend en outre un dispositif d'amplification de chaque impulsion émise qui tout en ajoutant le maximum d'énergie à l'impulsion lui conserve ses propriétés spectrales et temporelles. Un dispositif d'amplification 13 large bande amplifie indifféremment les impulsions de chaque longueur d'onde, c'est-à-dire couvre la gamme des N longueurs d'onde des émetteurs ; des dispositifs d'amplification en bande étroite amplifient spécifiquement les impulsions de chaque longueur d'onde, c'est-à-dire un dispositif d'amplification est dédié à chaque longueur d'onde. Dans le cas où on utilise K émetteurs Eᵢ, la bande passante de chaque amplificateur à bande étroite couvre les Mᵢ longueurs d'onde correspondantes. On peut choisir un dispositif d'amplification large bande et/ou des dispositifs d'amplification à bande étroite.

On peut envisager plusieurs configurations possibles pour la partie émission du télémètre.

Configuration A : le dispositif d'émission comprend K émetteurs et K coupleurs optiques.

Configuration B : le dispositif d'émission comprend K émetteurs et un multiplexeur optique regroupant les K faisceaux optiques en 1 faisceau optique dirigé vers 1 coupleur optique.

Configuration C : le dispositif d'émission comprend K émetteurs, K faisceaux optiques respectivement dirigés vers K coupleurs optiques ; les émissions aux N longueurs d'onde distinctes sont amplifiées par K amplificateurs à bande étroite situés en aval ou en amont des coupleurs optiques. Il s'agit de la configuration A à laquelle on ajoute des amplificateurs à bande étroite.

Configuration D : le dispositif d'émission comprend K émetteurs, K faisceaux optiques et un multiplexeur optique regroupant les K faisceaux en 1 faisceau optique dirigé vers 1 coupleur optique ; les émissions aux N longueurs d'onde distinctes sont respectivement amplifiées par K amplificateurs à bande étroite situés entre les émetteurs et le multiplexeur optique.

Configuration E : le dispositif d'émission comprend K émetteurs, K faisceaux optiques et un multiplexeur optique regroupant les K faisceaux en 1 faisceau optique dirigé vers 1 coupleur optique ; il comprend en outre un amplificateur large bande situé entre le multiplexeur et le coupleur. Il s'agit de la configuration B complétée par une amplification large bande.

Configuration F : le dispositif d'émission comprend K émetteurs, K faisceaux optiques et un multiplexeur optique regroupant les K faisceaux en 1 faisceau optique dirigé vers 1 coupleur optique ; les émissions aux N longueurs d'onde distinctes sont respectivement amplifiées par K amplificateurs à bande étroite situés entre les émetteurs et le multiplexeur optique et par un amplificateur large bande situé entre le multiplexeur et le coupleur ou en aval du coupleur. Il s'agit de la configuration D complétée par une amplification large bande.

On a résumé dans le tableau ci-dessous ces différentes configurations avec N=K : on considère N émetteurs distincts pour simplifier.

| EMISSION | | | | | |
|---|---|---|---|---|---|
| | Émetteurs | Amplificateur à bande étroite | Multiplexeur optique | Amplificateur large bande | Coupleur optique |
| A | N | | | | N |
| B | N | | N→1 | | 1 |
| C | N | N | | | N |
| D | N | N | N→1 | | 1 |
| E | N | | N→1 | 1 | 1 |
| F | N | N | N→1 | 1 | 1 |

On considère à présent la partie réception des télémètres en relation avec la figure 1b. De la même manière que pour l'émission, les fonctions de base du télémètre sont pour la partie réception : le couplage optique avec l'atmosphère, éventuellement le démultiplexage optique, la détection, l'accumulation sur toutes les longueurs d'onde des signaux détectés.

Le télémètre comprend une optique de réception de couplage avec l'atmosphère. Le couplage optique est nécessaire pour collecter les impulsions rétrodiffusées (ou réfléchies) par la cible éclairée et les diriger vers le détecteur. Il y un coupleur optique 24 par récepteur ou un coupleur optique commun à plusieurs récepteurs.

Le dispositif de réception comprend de préférence un dispositif d'amplification 23 de chaque impulsion réfléchie qui permet d'amplifier des signaux très faibles en leur ajoutant le minimum de bruit : le but est d'améliorer le rapport signal à bruit de détection. De même que pour l'émission, on peut choisir un dispositif d'amplification large bande qui amplifie indifféremment chaque impulsion et/ou des dispositifs d'amplification à bande étroite qui amplifient spécifiquement chaque impulsion.

Un filtre optique 22 des impulsions réfléchies venant de l'objet est utilisé pour séparer les différents canaux à détecter, c'est-à-dire pour les démultiplexer. La séparation est spectrale.

Après ce filtrage, on peut amplifier les impulsions de chaque canal au moyen d'un amplificateur en bande étroite.

Un détecteur ne peut être utilisé qu'en relation à un seul canal. La distance de l'objet n'étant pas connue, la détection doit être active tant que des échos sont attendus. La détection peut être obtenue par un détecteur apte à détecter les impulsions réfléchies pour plusieurs longueurs d'onde et à les distinguer en fonction de leur longueur d'onde. On a plus généralement K' détecteurs 20 chaque détecteur Dⱼ étant apte à détecter des impulsions selon Pⱼ longueurs d'onde distinctes, j variant de 1 à K' avec P₁ + P₂ + ...+ P_{k'} = N.

Un dispositif d'accumulation classique est utilisé pour réaliser la post intégration des impulsions détectées.

Les optiques de couplage 14 et 24 peuvent être communes à l'émission et à la réception.

Dans le cas où on utilise K' détecteurs Dⱼ et des amplificateurs à bande étroite, la bande passante de chaque amplificateur à bande étroite couvre les Pⱼ longueurs d'onde correspondantes.

On peut envisager plusieurs configurations possibles pour la partie réception du télémètre.

Configuration G : le dispositif de réception comprend K' coupleurs optiques et K' détecteurs.

Configuration H : le dispositif de réception comprend 1 coupleur optique, un filtre séparant les K' faisceaux issus du coupleur optique pour les diriger respectivement vers K' détecteurs.

Configuration I : le dispositif de réception comprend K' coupleurs optiques, K' détecteurs et K' amplificateurs à bande étroite situés entre les coupleurs et les détecteurs ou en amont des coupleurs. Il s'agit de la configuration G à laquelle on ajoute des amplificateurs à bande étroite.

Configuration J : le dispositif de réception comprend 1 coupleur optique, un filtre séparant les K' faisceaux issus du coupleur optique pour les diriger respectivement vers K' détecteurs, et K' amplificateurs à bande étroite situés entre les coupleurs et les détecteurs ou en amont des coupleurs. Il s'agit de la configuration H à laquelle on ajoute des amplificateurs à bande étroite.

Configuration K : le dispositif de réception comprend 1 coupleur optique, un filtre séparant les K' faisceaux issus du coupleur optique pour les diriger respectivement vers K' détecteurs, et un amplificateur large bande situé entre les coupleurs et les détecteurs. Il s'agit de la configuration H à laquelle on ajoute un amplificateur large bande.

Configuration L : le dispositif de réception comprend 1 coupleur optique, un filtre séparant les K' faisceaux issus du coupleur optique pour les diriger respectivement vers K' détecteurs, et un amplificateur large bande situé entre le filtre et les détecteurs ainsi que K' amplificateurs à bande étroite situés entre le coupleur et le filtre.

Le tableau ci-après résume ces différentes configurations possibles avec K'=N : on considère N détecteurs distincts pour simplifier.

| RECEPTION | | | | | |
|---|---|---|---|---|---|
| | Coupleur optique | Amplificateur large bande | Filtre | Amplificateur à bande étroite | Détecteur |
| G | N | | | | N |
| H | 1 | | 1→N | | N |
| I | N | | | N | N |
| J | 1 | | 1→N | N | N |
| K | 1 | 1 | 1→N | | N |
| L | 1 | 1 | 1→N | N | N |

Les configurations de réception sont en relation avec les configurations d'émission par le nombre et les valeurs précises des canaux utilisés.

On va à présent détailler un exemple de télémètre selon l'invention. Il a les caractéristiques suivantes :
- pour les profils de mission prévue, la portée théorique est de 96 km.
- une fréquence seuil de répétition des impulsions donc égale à 1568 Hz
- N= 32 et À compris entre 1540,65 nm et 1565.65 nm

Le dispositif d'émission comporte les éléments suivants.

Il comprend N émetteurs 10 chacun émettant une longueur d'onde, disposés en parallèle, fonctionnant chacun à une fréquence de répétition des impulsions inférieure à la fréquence seuil. Ainsi aucun émetteur ne rencontre le problème de l'ambigüité sur la distance. De préférence on utilise des émetteurs à encombrement réduit tels que des diodes lasers voire des diodes électroluminescentes. Ces diodes laser ont typiquement une fréquence de répétition des impulsions égale à 1250 Hz, et une largeur d'impulsion égale à 10 ns.

Chaque émetteur est relié à un multiplexeur optique 12 au moyen d'une fibre optique 11. Le multiplexeur optique regroupe les N canaux optiques en un seul canal optique. On peut citer comme exemple de multiplexeur optique qui regroupe N fibres optiques en une fibre optique : Cisco ONS 15454 32 channels 100 GHz Optical Multiplexer.

Le multiplexeur est relié par une fibre optique à un amplificateur large bande 13. Cet amplificateur vise à augmenter i'énergie par impulsion, typiquement de quelques nJ à quelques mJ.

L'amplificateur est lui-même relié à un coupleur optique 14. Le faisceau laser émis est collimaté vers la cible par le coupleur d'émission pour produire un faisceau de faible divergence. Ce coupleur est par exemple un objectif collimateur.

A chacun des émetteurs correspond un détecteur. Il y a donc autant de détecteurs à longueurs d'onde distinctes qui détectent les impulsions rétrodiffusées pour chaque longueur d'onde.

Le dispositif de réception d'impulsions rétrodiffusées par la cible comprend les éléments suivants.

Il comprend un coupleur de réception 24 tel qu'un objectif de réception du même type que celui du dispositif d'émission. En sortie du coupleur le faisceau est dirigé vers un amplificateur optique large bande 23 au moyen d'une fibre optique. Cet amplificateur vise à augmenter S/B, c'est-à-dire à augmenter le gain sans augmenter le bruit, typiquement d'un facteur 1000.

L'amplificateur est relié à un filtre 22 apte à séparer le faisceau optique à N longueurs d'onde en N faisceaux optiques de longueurs d'onde distinctes. Ce filtre est par exemple un réseau de Bragg.

Les N faisceaux optiques sont dirigés au moyen par exemple de fibres optiques 21, vers N détecteurs 20 dont les longueurs d'onde correspondent à celles des N émetteurs. Ces détecteurs sont typiquement des photodiodes en InGaAs pouvant être à avalanche, aptes à transformer un signal optique en un signal électrique. Chaque signal électrique est alors numérisé, par exemple à une fréquence d'échantillonnage d'environ 100 MHz.

A chaque impulsion optique émise est associé un flux de données considéré pendant une durée commençant à l'émission de l'impulsion et s'étendant jusqu'à l'instant correspondant à la distance d'intérêt choisie pour le système. La post intégration est l'opération de sommation de ces flux de données, et est réalisée par le dispositif d'accumulation. Les signaux détectés correspondant à la même distance sont sommés ensemble. A la distance où il y a une cible réelle, le signal doit se démarquer du bruit si le nombre d'impulsions est suffisant.

Les voies optiques d'émission et de réception sont, de préférence, séparées, compte tenu du déséquilibre entre les énergies des impulsions émises et celles des impulsions réfléchies reçues par le dispositif de réception.

Eventuellement on peut envisager qu'une partie des voies optiques soit commune dans le cas d'un fonctionnement alterné entre l'émission et la réception.

## Revendications

1. Télémètre comportant un dispositif d'émission d'impulsions laser, un dispositif de détection des impulsions réfléchies par un objet distant, et des moyens de post-intégration des impulsions détectées aptes à fournir un rapport signal/bruit proportionnel à la racine carrée du nombre des impulsions émises, **caractérisé en ce que** le dispositif d'émission est apte à émettre des impulsions de N longueurs d'onde distinctes, N étant un entier supérieur à 1, avec pour chaque longueur d'onde, une fréquence de répétition des impulsions inférieure à une fréquence seuil prédéterminée pour ne pas avoir d'ambiguïté distance, et **en ce que** d'une longueur d'onde à l'autre, les fréquences de répétition des impulsions sont différentes.

2. Télémètre selon la revendication précédente, **caractérisé en ce que** les impulsions étant émises à des instants d'émission, les instants d'émission des impulsions de longueurs d'onde différentes sont différents.

3. Télémètre selon l'une des revendications précédentes, **caractérisé en ce qu'**il comprend un dispositif de détection apte à détecter les impulsions réfléchies pour chacune des N longueurs d'onde et un dispositif d'accumulation des impulsions détectées.

4. Télémètre selon l'une des revendications précédentes, **caractérisé en ce que** le dispositif d'émission comprend K émetteurs (10) chacun étant apte à émettre des impulsions à Mᵢ longueurs d'onde distinctes, i variant de 1 à K avec M₁ + M₂ + ...+ Mₖ = N, K étant un entier tel que 1 <=K<=N.

5. Télémètre selon l'une des revendications précédentes, **caractérisé en ce que** le dispositif d'émission comprend un dispositif d'amplification optique (13) de chaque impulsion émise.

6. Télémètre selon la revendication précédente, **caractérisé en ce que** le dispositif d'amplification (13) comprend un amplificateur large bande dont la bande passante comprend les N longueurs d'onde, et/ou K amplificateurs à bande étroite dont les bandes passantes correspondent respectivement aux Mᵢ longueurs d'onde, K étant un entier tel que 1 <=K<=N.

7. Télémètre selon la revendication 4, **caractérisé en ce que** le dispositif d'émission comprend un dispositif d'amplification (13) à K amplificateurs à bande étroite dont les bandes passantes correspondent respectivement aux Mᵢ longueurs d'onde, avec 1<K, et **en ce que** le dispositif d'émission comprend un dispositif de multiplexage (12) des impulsions issues des K émetteurs.

8. Télémètre selon l'une des revendications précédentes, **caractérisé en ce que** le dispositif d'émission comprend au moins un coupleur optique d'émission (14).

9. Télémètre selon l'une des revendications précédentes, **caractérisé en ce que** les émetteurs (10) sont des diodes laser.

10. Télémètre selon l'une des revendications précédentes, **caractérisé en ce que** le dispositif de détection comprend K' détecteurs, K' étant un entier tel que 1<=K'<=N, chaque détecteur Dⱼ (20) étant apte à détecter des impulsions selon Pⱼ longueurs d'onde distinctes, j variant de 1 à K' avec P₁ + P₂ + ...+ P_{k'} = N.

11. Télémètre selon l'une des revendications précédentes, **caractérisé en ce que** le dispositif de détection comprend un dispositif d'amplification optique (23) de chaque impulsion reçue.

12. Télémètre selon la revendication précédente, **caractérisé en ce que** le dispositif d'amplification comprend un amplificateur large bande dont la bande passante comprend les N longueurs d'onde, et/ou K' amplificateurs à bande étroite dont les bandes passantes correspondent respectivement aux Pⱼ longueurs d'onde.

13. Télémètre selon l'une des revendications précédentes, **caractérisé en ce que** le dispositif de détection comprend un dispositif de filtrage optique (22) des impulsions reçues selon N longueurs d'onde.

14. Télémètre selon l'une des revendications précédentes, **caractérisé en ce que** le dispositif de détection comprend au moins un coupleur optique de détection (24).

## Patentansprüche

1. Entfernungsmesser, der Folgendes umfasst: eine Vorrichtung zum Emittieren von Laserimpulsen, eine Vorrichtung zum Erkennen von von einem fernen Objekt reflektierten Impulsen und Mittel zur Nachintegration der erkannten Impulse, um ein Signal-Rausch-Verhältnis proportional zur Quadratwurzel der Zahl der emittierten Impulse bereitzustellen, **dadurch gekennzeichnet, dass** die Emittiervorrichtung so ausgelegt ist, dass sie Impulse von N verschiedenen Wellenlängen emittiert, wobei N eine ganze Zahl größer als 1 ist, für jede Wellenlänge mit einer Impulswiederholfrequenz, die niedriger ist als eine vorbestimmte Frequenzschwelle, um Distanzambiguität zu vermeiden, und dadurch, dass die Impulswiederholfrequenzen von einer Wellenlänge zur nächsten unterschiedlich sind.

2. Entfernungsmesser nach dem vorherigen Anspruch, **dadurch gekennzeichnet, dass**, da die Impulse zu Emissionszeitpunkten emittiert werden, die Emissionszeitpunkte von Impulsen mit unterschiedlichen Wellenlängen unterschiedlich sind.

3. Entfernungsmesser nach einem der vorherigen Ansprüche, **dadurch gekennzeichnet, dass** er eine Detektionsvorrichtung umfasst, die so ausgelegt ist, dass sie die für jede der N Wellenlängen reflektierten Impulse detektiert, und eine Vorrichtung zum Akkumulieren von detektierten Impulsen.

4. Entfernungsmesser nach einem der vorherigen Anprüche, **dadurch gekennzeichnet, dass** die Emittiervorrichtung K Emitter (10) jeweils zum Emittieren von Impulsen mit Mᵢ verschiedenen Wellenlängen umfasst, wobei i von 1 bis K variiert, wobei M₁ + M₂ + ...+ Mₖ = N, wobei K eine ganze Zahl ist, so dass 1 <=K<=N.

5. Entfernungsmesser nach einem der vorherigen Ansprüche, **dadurch gekennzeichnet, dass** die Emittiervorrichtung eine Vorrichtung (13) zum optischen Verstärken jedes emittierten Impulses umfasst.

6. Entfernungsmesser nach dem vorherigen Ansprüche, **dadurch gekennzeichnet, dass** die Verstärkungsvorrichtung (13) einen Breitbandverstärker umfasst, dessen Passband die N Wellenlängen umfasst, und/oder K Schmalbandverstärker, deren Passbänder jeweils den Mᵢ Wellenlängen entsprechen, wobei K eine ganze Zahl ist, so dass 1<=K<=N.

7. Entfernungsmesser nach Anspruch 4, **dadurch gekennzeichnet, dass** die Emissionsvorrichtung eine Verstärkungsvorrichtung (13) mit K Schmalbandverstärkern umfasst, deren Passbänder jeweils den Mᵢ Wellenlängen entsprechen, wobei 1<K ist, und dadurch, dass die Emittiervorrichtung eine Vorrichtung (12) zum Multiplexieren der von den K Emittern kommenden Impulse umfasst.

8. Entfernungsmesser nach einem der vorherigen Ansprüche, **dadurch gekennzeichnet, dass** die Emittiervorrichtung wenigstens einen optischen Emissionskoppler (14) umfasst.

9. Entfernungsmesser nach einem der vorherigen Ansprüche, **dadurch gekennzeichnet, dass** die Emitter (10) Laserdioden sind.

10. Entfernungsmesser nach einem der vorherigen Ansprüche, **dadurch gekennzeichnet, dass** die Detektionsvorrichtung K' Detektoren umfasst, wobei K' eine ganze Zahl ist, so dass 1<=K'<=N, wobei jeder Detektor Dⱼ (20) so ausgelegt ist, dass er Impulse gemäß Pⱼ verschiedenen Wellenlängen detektiert, wobei j von 1 bis K' variiert, wobei P₁ + P₂ + ...+ M_{k'} = N.

11. Entfernungsmesser nach einem der vorherigen Ansrpüche, **dadurch gekennzeichnet, dass** die Detektionsvorrichtung eine Vorrichtung (23) zum optischen Verstärken jedes empfangenen Impulses umfasst.

12. Entfernungsmesser nach dem vorherigen Ansprüche, **dadurch gekennzeichnet, dass** die Verstärkungsvorrichtung einen Breitbandverstärker umfasst, dessen Passband die N Wellenlängen umfasst, und/oder K' Schmalbandverstärker, deren Passbänder jeweils den Pⱼ Wellenlängen entsprechen.

13. Entfernungsmesser nach einem der vorherigen Ansprüche, **dadurch gekennzeichnet, dass** die Detektionsvorrichtung eine Vorrichtung (22) zum optischen Filtern der empfangenen Impulse gemäß N Wellenlängen umfasst.

14. Entfernungsmesser nach einem der vorherigen Ansprüche, **dadurch gekennzeichnet, dass** die Erkennungsvorrichtung wenigstens einen optischen Detektionskoppler (24) umfasst.

## Claims

1. A range-finder comprising a device for emitting laser pulses, a device for detecting pulses reflected by a remote object, and means for post-integrating the detected pulses designed to provide a signal-to-noise ratio that is proportional to the square root of the number of emitted pulses, **characterised in that** said emission device is designed to emit pulses of N distinct wavelengths, N being an integer greater than 1, with, for each wavelength, a pulse repetition frequency that is lower than a predetermined frequency threshold so as to avoid distance ambiguity, and **in that** the pulse repetition frequencies are different from one wavelength to the next.

2. The range-finder according to the preceding claim, **characterised in that**, with the pulses being emitted at emission instants, the emission instants of the pulses with different wavelengths are different.

3. The range-finder according to any one of the preceding claims, **characterised in that** it comprises a detection device that is designed to detect the pulses reflected by each of the N wavelengths and a device for accumulating detected pulses.

4. The range-finder according to any one of the preceding claims, **characterised in that** said emission device comprises K emitters (10) each designed to emit pulses at Mᵢ distinct wavelengths, i varying from 1 to K with M₁ + M₂ + ...+ Mₖ = N, K being an integer so that 1<=K<=N.

5. The range-finder according to any one of the preceding claims, **characterised in that** said emission device comprises a device (13) for optically amplifying each emitted pulse.

6. The range-finder according to the preceding claim, **characterised in that** said amplification device (13) comprises a wideband amplifier, the passband of which comprises the N wavelengths, and/or K narrowband amplifiers, the passbands of which respectively correspond to the Mᵢ wavelengths, K being an integer so that 1<=K<=N.

7. The range-finder according to claim 4, **characterised in that** said emission device comprises an amplification device (13) with K narrowband amplifiers, the passbands of which respectively correspond to the Mᵢ wavelengths, with 1<K, and **in that** said emission device comprises a device (12) for multiplexing the pulses coming from the K emitters.

8. The range-finder according to any one of the preceding claims, **characterised in that** said emission device comprises at least one optical emission coupler (14).

9. The range-finder according to any one of the preceding claims, **characterised in that** the emitters (10) are laser diodes.

10. The range-finder according to any one of the preceding claims, **characterised in that** said detection device comprises K' detectors, K' being an integer so that 1<=K'<=N, each detector Dⱼ (20) being designed to detect pulses according to Pⱼ distinct wavelengths, j varying from 1 to K' with P₁ + P₂ + ...+ M_{k'} = N.

11. The range-finder according to any one of the preceding claims, **characterised in that** said detection device comprises a device (23) for optically amplifying each received pulse.

12. The range-finder according to the preceding claim, **characterised in that** said amplification device comprises a wideband amplifier, the passband of which comprises the N wavelengths, and/or K' narrowband amplifiers, the passbands of which respectively correspond to the Pⱼ wavelengths.

13. The range-finder according to any one of the preceding claims, **characterised in that** said detection device comprises a device (22) for optically filtering the received pulses according to N wavelengths.

14. The range-finder according to any one of the preceding claims, **characterised in that** said detection device comprises at least one optical detection coupler (24).
